# EUROPÄISCHE PATENTSCHRIFT

(11) **EP 3 720 808 B1**
(45) Veröffentlichungstag und Bekanntmachung des Hinweises auf die Patenterteilung: **20.01.2021**
(21) Anmeldenummer: 17821466.4
(22) Anmeldetag: 08.12.2017
(51) Int. Cl.: F16L 37/32, B67D 7/32, F16L 55/10

(54) **KUPPLUNG ZUR ÜBERTRAGUNG VON FLUIDEN, VERFAHREN ZUM VERSCHLEISSEN DES FLUIDKANALS EINER SOLCHEN KUPPLUNG UND BEVORZUGTE VERWENDUNG DIESER KUPPLUNG**
COUPLING FOR TRANSFERRING FLUIDS, METHOD FOR CLOSING THE FLUID DUCT OF SUCH A COUPLING, AND PREFERRED USE OF THIS COUPLING
RACCORD POUR TRANSFERT DE FLUIDES, PROCÉDÉ DE FERMETURE DU CANAL DE FLUIDE D'UN TEL RACCORD ET UTILISATION PRÉFÉRÉE D'UN TEL RACCORD

(43) Veröffentlichungstag der Anmeldung: 14.10.2020
(73) Patentinhaber: WEH GmbH Verbindungstechnik, 89257 Illertissen (DE)
(72) Erfinder: WEH, Erwin, 89257 Illertissen (DE); WEH, Wolfgang, 89257 Illertissen (DE)
(74) Vertreter: Kirklies, Michael Dieter
(86) Internationale Anmeldenummer: PCT/DE2017/101051
(87) Internationale Veröffentlichungsnummer: WO 2019/110027

(56) Entgegenhaltungen:
- US-B1- 6 182 695
- US-B1- 6 899 131

## Beschreibung

### Stand der Technik

Die Erfindung betrifft das technische Gebiet der Betankungstechnik und insbesondere eine Kupplung zur Übertragung von Fluiden nach Anspruch 1, ein Verfahren zum Verschließen des Fluidkanals einer solchen Kupplung nach Anspruch 12 und eine bevorzugte Verwendung dieser Kupplung nach Anspruch 14.

Bei der Wasserstoffbetankung von Brennstoffzellenfahrzeugen wird das Fahrzeug über eine Füllkupplung und einen daran anschließenden Schlauch mit dem Dispenser einer Tankstelle verbunden. Aus Sicherheitsgründen muss dieser Schlauch bei definierter Zugbelastung vom Dispenser abzutrennen und danach ein Medienaustritt auf Schlauch- und Dispenser-Seite zu verhindern sein. Die Kraft, bei welcher der Abriss erfolgen muss, ist auf einen bestimmten Bereich festgelegt. Gleichzeitig besteht die Herausforderung darin, dass die Ober- und Untergrenze der Abreißkraft bei Drücken von 0 bar bis zum maximalen Betriebsdruck im kompletten Temperaturbereich nicht über- bzw. unterschritten werden darf. Es ist also auszuschließen, dass der Druck axiale Kräfte hervorruft, welche die Abreißkraft wesentlich beeinflussen. Zudem besteht die Anforderung, dass die Abreißsicherung über den kompletten Druck- und Temperaturbereich dicht ist

Eine Kupplung gemäß dem einleitenden Teil des Anspruchs 1 ist aus der US 6 182 695 B1 bekannt.

### Aufgabe der Erfindung

Es ist eine Aufgabe der Erfindung, die vorstehenden Probleme zu lösen und die Betankungssicherheit eines Fahrzeugs auf einfache und zuverlässige, zudem kostengünstige Weise zu erhöhen.

### Lösung der Aufgabe

Diese Aufgabe wird durch eine Kupplung zur Übertragung von Fluiden nach Anspruch 1 gelöst, die ein Gehäuse und einen daran festlegbaren Nippel umfasst, der bei Überschreiten einer vorbestimmten axialen Zugkraft unter Überwindung einer Federkraft von dem Gehäuse trennbar ist, und mit einem das Gehäuse und den Nippel durchtretenden Fluidkanal, in dessen Verlauf ein gehäuseseitiges und ein nippelseitiges Rückschlagventil angeordnet sind, und der radial gelenkt um einen entlüfteten zylindrischen Innenraum des Nippels herum geführt ist, und bei welcher ein Verschlussmechanismus jeweilige ventilseitige Stifte und eine zwischen diesen Stiften angeordnete Hülse umfasst, die axial bewegbar in dem Innenraum des Nippels angeordnet ist, und mittels federdruckgelagerten Verriegelungselementen mit wenigstens einem der Stifte so verriegelbar ist, dass bei festgelegtem Nippel die Rückschlagventile entgegen deren Federkraft offen gehalten werden, und bei gelöstem Nippel das gehäuseseitige Rückschlagventil vollständig geschlossen und das nippelseitige Rückschlagventil wenigstens teilweise geschlossen ist, und bei welcher die Hülse einen gehäuseseitigen Kolben umgreift, und über die Verriegelungselemente daran festlegbar und entgegen deren Federkraft davon trennbar ist, und der gehäuseseitige Stift axial bewegbar in dem Kolben geführt ist, und sich in einem geöffneten Zustand des gehäuseseitigen Rückschlagventils gegen die Verriegelungselemente abstützt.

Ein wesentlicher Punkt der erfindungsgemäßen Kupplung besteht dabei darin, dass die weitgehende Druckunabhängigkeit durch radiale Druckübergabe mit jeweils beidseitiger radialer Abdichtung zwischen dem am Dispenser befestigten Teil der Abreißkupplung und dem am Schlauch befestigten Abreißnippel sichergestellt werden kann. Es sind damit insbesondere keine dynamischen Dichtungen mehr notwendig, die wartungsanfälliger und teurer als statische Dichtungen sind. Gleichzeitig entsteht ein einziger einfacher Verschlussmechanismus für beide Rückschlagventile, der die Federkraft der Rückschlagventile selbst nutzt, um diese im Abreißfall sicher zu verschließen. Dabei wird das nippelseitige Rückschlagventil nur dann ganz geschlossen, wenn eine kontrollierte Entlüftung des Schlauches nicht erforderlich sein sollte oder anders bewerkstelligt werden kann Auch ist gleich die dreifache Funktion der Festlegung der Hülse zum Schließen des nippelseitigen Rückschlagventils, des Schließens des gehäuseseitigen Rückschlagventils und des Trennens von Nippel und Gehäuse im Abrissfall gewährleistet.

### Bevorzugte Ausführungsformen

Bevorzugte Ausführungsformen der vorliegenden Erfindung sind in den jeweiligen Unteransprüchen angegeben.

In einer ersten bevorzugten Ausführungsform der erfindungsgemäßen Kupplung ist es vorgesehen, dass der Kolben wenigstens eine Axialnut aufweist, in welche ein jeweiliges Verriegelungselement eingreift, und die eine sich daran anschließende, zum freien Ende des Kolbens hin stetig radial nach außen verlaufende Kolbenschräge aufweist, über welche die Verriegelungselemente beim Abziehen der Hülse von dem Kolben entgegen deren Federkraft radial nach außen drückbar sind. Dadurch wird eine besonders einfache und gleichzeitig zuverlässige mechanische Lösung für die Trennung der Hülse vom Kolben bei gleichzeitigen Schließen des gehäuseseitigen Rückschlagventils bereitgestellt.

In einer weiteren bevorzugten Ausführungsform der erfindungsgemäßen Kupplung ist es vorgesehen, dass der Kolben eine Spitze aufweist, die sich zum freien Ende des Kolbens hin stetig verjüngt, über welche die Verriegelungselemente beim Aufstecken der Hülse auf den Kolben entgegen deren Federkraft radial nach außen drückbar sind. Dadurch wird eine einfache und zudem zuverlässige mechanische Lösung für die (Wieder)Montage der Hülse am Kolben nach einem Abriss bei gleichzeitigem Öffnen des gehäuseseitigen Rückschlagventils bereitgestellt.

In einer noch weiteren bevorzugten Ausführungsform der erfindungsgemäßen Kupplung ist es vorgesehen, dass ein freies Ende des Kolbens gegen den Fluidkanal abgedichtet und bei an dem Gehäuse festgelegtem Nippel in dem entlüfteten Innenraum aufgenommen ist. Durch die Aufnahme in dem entlüfteten Innenraum wird ein Gegendruck an der Kolbenspitze ausgeschlossen, der die druckunabhängige Funktionsweise der Kupplung gefährden würde. In einer noch weiteren bevorzugten Ausführungsform der erfindungsgemäßen Kupplung ist es vorgesehen, dass sich die stetig verjüngende Spitze des Kolbens in den entlüfteten Innenraum hinein erstreckt. Dadurch wird nicht nur ein Gegendruck an der Kolbenspitze ausgeschlossen, der die Druckunabhängigkeit der Kupplung gefährden würde, sondern gleichzeitig auch die (Wieder)Montage der Hülse einfach möglich.

In einer noch weiteren bevorzugten Ausführungsform der erfindungsgemäßen Kupplung ist es vorgesehen, dass sich der gehäuseseitige Stift über einen axialen Anschlag und insbesondere zusätzlich über ein den Stift ringförmig umgreifendes Halteelement gegen die Verriegelungselemente, insbesondere gegen Verriegelungspins abstützt, womit ein mechanisch besonders einfacher Verschlussmechanismus verwirklicht ist. Das zusätzliche Halteelement kann dabei eine besonders exakte Positionierung und Abstützung der Verriegelungselemente bieten, gerade dann, wenn diese als daran anstehende Verriegelungspins ausgestaltet sind.

In einer noch weiteren bevorzugten Ausführungsform der erfindungsgemäßen Kupplung ist es vorgesehen, dass ein Entlüftungskanal vorgesehen ist, der bei an dem Gehäuse festgelegtem Nippel dessen entlüfteten Innenraum mit einem nicht von dem Gehäuse umfassten Teil des Nippels verbindet. Da dieser Teil direkt mit der Umgebung kommunizieren kann, besteht eine mechanisch einfache und zuverlässige Entlüftung des Innenraums, der stets das Druckniveau der Umgebung der Kupplung aufweist.

In einer noch weiteren bevorzugten Ausführungsform der erfindungsgemäßen Kupplung ist es vorgesehen, dass die Hülse fest mit dem nippelseitigen Stift verbunden und dieser insbesondere als Zylinderstift ausgeführt ist. Grundsätzlich muss die Hülse dabei nicht notwendigerweise fest mit dem Stift verbunden sein. Ein fest verbundener Stift stellt aber eine einfache mechanische Lösung dar, da an dieser Stelle kein separates Teil erfordert.

In einer noch weiteren bevorzugten Ausführungsform der erfindungsgemäßen Kupplung ist es vorgesehen, dass der Fluidkanal im Bereich der Verriegelungselemente, insbesondere in einer radialen Lageebene der Verriegelungselemente, von dem Kolben aus radial durch die Hülse verläuft. Dadurch kann die Materialstärke im Bereich der Verriegelungselemente zum Erreichen einer kompakten Bauart ausgenutzt werden, genauso wie eine axiale Führung des Fluids zwischen Hülse und Nippelgehäuse. Grundsätzlich wäre dabei auch denkbar, die Verriegelungspins selbst mit einem Fluidkanal auszustatten oder zu umgeben.

In einer noch weiteren bevorzugten Ausführungsform der erfindungsgemäßen Kupplung ist es vorgesehen, dass der Nippel über eine kombinierte Kugel- / Federsicherung gegen Trennung von dem Gehäuse durch die vorbestimmte axiale Zugkraft festgelegt ist. Dadurch entsteht eine definierte Abreißsicherung, welche zudem alle Normvorschriften erfüllt. Bevorzugt ist dabei die kombinierte Kugel- / Federsicherung zum Einstecken des Nippels in das Gehäuse über einen Exzentermechanismus vorspannbar. Dies erlaubt insbesondere eine besonders einfache (Wieder)Montage des Nippels in dem Gehäuse.

Die vorstehende Aufgabe wird auch durch ein Verfahren nach Anspruch 12 zum Verschließen des Fluidkanals einer beschriebenen Kupplung gelöst, bei dem eine vorbestimmte axiale Zugkraft überwunden und der Nippel von dem Gehäuse gelöst wird, und durch axiales Bewegen des Nippels relativ zu der Hülse ein nippelseitiges Rückschlagventil wenigstens teilweise geschlossen wird, und durch axiales Bewegen des Nippels gemeinsam mit der Hülse ein gehäuseseitiges Rückschlagventil vollständig geschlossen wird.

Ein wesentlicher Punkt des erfindungsgemäßen Verfahrens besteht dabei in seinem einfachen Ablauf zum Verschließen beider Rückschlagventile, der einen genauso zuverlässigen wie auch sicheren Abriss des Nippels sicherstellt. Insbesondere erfordert dieses Verfahren keine Änderung des üblichen Nutzerverhaltens bei der Betankung eines Fahrzeugs, das ansonsten bestimmte Handlungsabläufe, Prüfvorgänge und Sicherheitsvorkehrungen vorschreiben würde.

In einer bevorzugten Ausgestaltung des erfindungsgemäßen Verfahrens ist es vorgesehen, dass die kombinierte Kugel- / Federsicherung über den Exzentermechanismus vorgespannt, der Nippel in das Gehäuse eingesteckt und durch Entspannen der kombinierten Kugel- / Federsicherung festgelegt wird. Damit ist insbesondere eine besonders einfache (Wieder)Montage des Nippels in dem Gehäuse möglich, die mit herkömmlichem Werkzeug durchführbar ist.

Auf Grund der besonders hohen Zuverlässigkeit und einfachen Handhabbarkeit der vorstehend beschriebenen Kupplung soll diese bevorzugt zur Betankung von Fahrzeugen, insbesondere mit Wasserstoff, Erdgas oder Flüssiggas verwendet werden. Gerade bei den hohen Druckniveaus bei Wasserstoffbetankung ist dabei eine Dichtigkeit auch im Abrissfall gewährleistet.

### Kurze Beschreibung der Figuren

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen. Es zeigen:
- Figur 1a: eine längsgeschnittene Seitenansicht einer erfindungsgemäßen Kupplung in verbundenem Zustand;
- Figur 1b: eine vergrößerte längsgeschnittene Seitenansicht des Verschlussmechanismus der Kupplung von Figur 1a;
- Figur 1c: eine vergrößerte längsgeschnittene perspektivische Ansicht des Verschlussmechanismus der Kupplung von Figur 1a;
- Figur 1d: eine vergrößerte perspektivische Ansicht nur des Kolbens der Kupplung von Figur 1a, und
- Figuren 2 bis 5: jeweilige längsgeschnittene Seitenansichten der erfindungsgemäßen Kupplung der Figur 1 im Abrissfall.

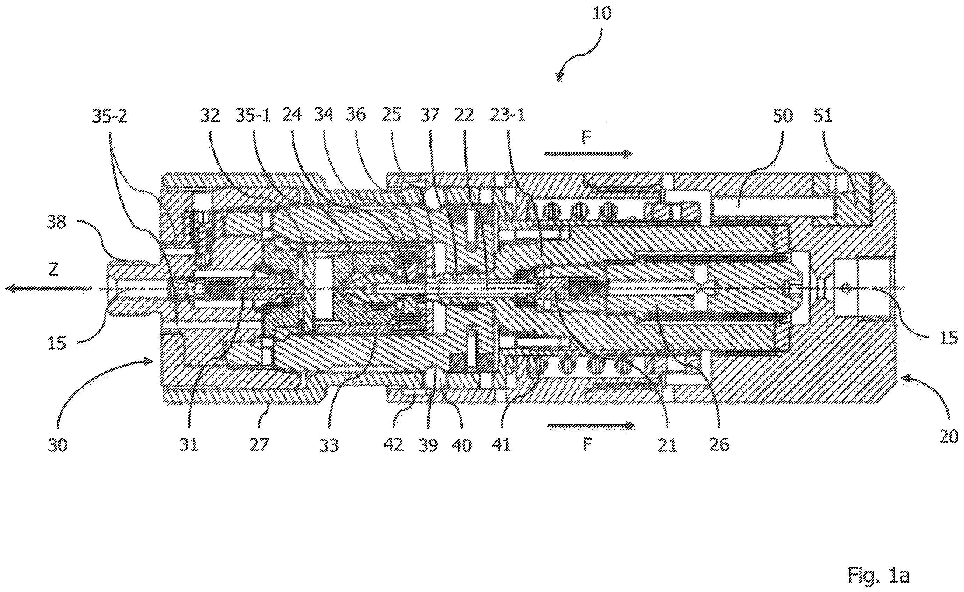

Figur 1a zeigt eine längsgeschnittene Seitenansicht einer erfindungsgemäßen Kupplung 10 in verbundenem Zustand. Die Kupplung 10 umfasst dabei ein Gehäuse 20, das mit einem Dispenser (nicht dargestellt) verbunden werden kann, und einen an diesem Gehäuse 20 festgelegten Nippel 30, der wiederum über einen daran anbringbaren Schlauch mit einer Füllkupplung (beides nicht dargestellt) verbunden werden kann.

Bei dieser Kupplung 10 strömt ein Medium von dem Dispenser her kommend in einen Fluidkanal 15 ein, wird dann durch einen Filter 26 geleitet und passiert anschließend ein gehäuseseitiges Rückschlagventil 21, das in einem Kolben 23-1 aufgenommen und durch einen gehäuseseitigen Stift 22 mechanisch am Schließen gehindert ist. Anschließend fließt das Medium durch einen Ringspalt 37 zwischen dem Kolben 23-1 und dem gehäuseseitigen Stift 22 und wird dann radial nach außen geleitet. Das Medium umströmt schließlich einen entlüfteten Innenraum 35-1 einer axial in dem Nippel 30 beweglich gelagerten Hülse 33, wird wieder radial nach innen geleitet und passiert dann ein nippelseitiges Rückschlagventil 31, das durch einen nippelseitigen Stift 32 ebenfalls mechanisch am Schließen gehindert ist. Danach verlässt das Medium die Kupplung 10 über einen Gewindeanschluss 38. Der entlüftete Innenraum 35-1 steht dabei über wenigstens einen allein in dem Nippel 30 verlaufenden Entlüftungskanal 35-2 mit der Umgebung in Verbindung.

Der Verschlussmechanismus zum Verhindern des Schließens von gehäuseseitigem und nippelseitigem Rückschlagventil 21 und 31 sieht dabei vor, dass diese im verbundenen Zustand der Kupplung 10 über den gehäuseseitigen und nippelseitigen Stift 22 und 32 gegen deren jeweilige Federkräfte am Schließen gehindert werden. Das nippelseitige Rückschlagventil 31 liegt an dem Stift 32 an, der quer in der den entlüfteten Innenraum 35-1 umgebenden Hülse 33 gelagert ist. Dieser Stift 32 ist hier fest mit der Hülse 33 verbunden, kann aber auch als separates Teil ausgeführt sein. Die Hülse 33 umfasst einen oder mehrere federnd gelagerte, radial nach innen gerichtete Verriegelungspins 34. Der gehäuseseitige Stift 22 weist ein daran montiertes Halteelement 36 auf, über das er sich gegen die Verriegelungspins 34 abstützt. Andererseits ist der gehäuseseitige Stift 22 an dem Rückschlagventil 21 angelagert und hält dieses gegen dessen Federkraft offen.

Im Abrissfall zieht der Nippel 30 über mehrere, das Gehäuse 20 und den Nippel 30 zusammenhaltende Kugeln 40 eine Gehäusebuchse 27 gegen die Kraft F einer Feder 41 in Abreißrichtung einer Zugkraft Z mit, bis die mitgezogenen Kugeln 40 in eine Entriegelungsnut 42, die in dem feststehenden Teil des Gehäuses 20 integriert ist, nach außen ausweichen können und dadurch den Nippel 30 freigeben. Durch die axiale Bewegung des Nippels 30 wird dabei der vorstehend beschriebene Verschlussmechanismus zwischen den beiden Rückschlagventilen 21 und 31 gelöst, wodurch diese aufgrund der an ihnen anliegenden Federkräfte gegen deren jeweiligen Dichtsitz gedrückt werden und ein Austreten des Mediums an beiden sich trennenden Komponenten 20 und 30 verhindern. Die Lösung der Verbindung erfolgt dadurch, dass die Hülse 33 in Abreißrichtung verschoben wird, wodurch die in der Hülse 33 gelagerten Verriegelungspins 34 aus einer Axialnut 24 des Kolbens 23-1 über eine Kolbenschräge 23-3 gezogen und dabei gegen eine Federkraft radial nach außen geschoben werden, bis ein Kolbenkopf 23-2 überwunden ist.

Durch die direkte mechanische Einbeziehung der Rückschlagventile 21 und 31 in den Verschlussmechanismus ist insbesondere keine alternative oder zusätzliche dynamische Abdichtung beider Komponenten 20 und 30 erforderlich, was zudem eine Verwendung standardisierter Bauelemente ermöglicht. Darüber hinaus kann eine druckunabhängige Abreißkraft Z durch flächenausgleichende Dichtungsquerschnitte gewährleistet werden.

Zur (Wieder)Montage des Nippels 30 an dem Gehäuse 20 ist ein Exzentermechanismus vorgesehen, der es erlaubt, die Feder 41 mittels eines Bolzens 50 vorzuspannen, der in dem Gehäuse 20 verschiebbar gelagert ist, und der durch Drehen eines Exzenters 51 in Richtung der Feder 41 bewegt werden kann. Damit ist ein einfaches Einstecken des abgerissenen Nippels 30 in die Gehäusebuchse 27 möglich, weil sich diese in eine Stellung bewegt, in welcher die Kugeln 40 der Kugel- / Federsicherung in der Entriegelungsnut 42 aufgenommen sind und den Nippel 30 nicht blockieren. Erst beim Zurückfahren des Bolzens 50 bewegt sich auch die Gehäusebuchse 27 wieder in eine Stellung zurück, in welcher die Kugeln 40 radial nach innen gedrückt werden und in eine Verriegelungsnut 39 des Nippels 30 eingreifen, über die eine Festlegung des Nippels 30 an dem Gehäuse 20 geschieht.

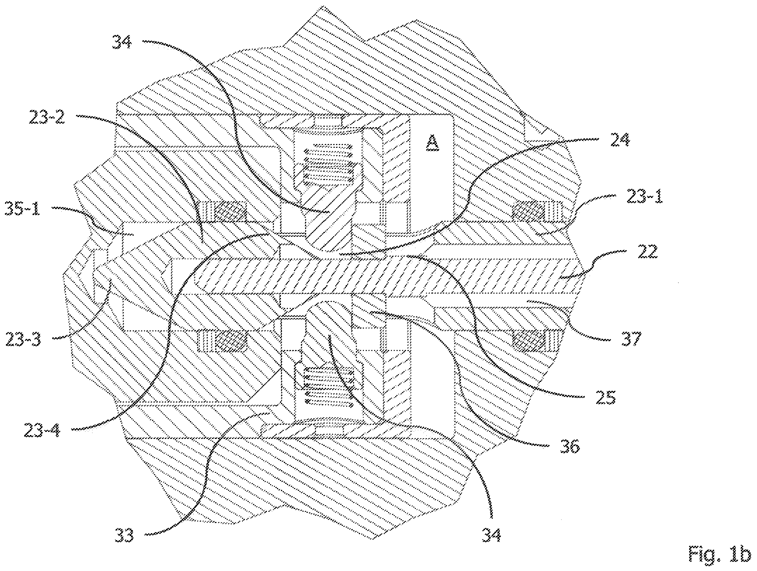

Figur 1b zeigt eine vergrößerte längsgeschnittene Seitenansicht des Verschlussmechanismus der Kupplung 10 von Figur 1a, bei dem die Federdruck beaufschlagten Verriegelungspins 34 der Hülse 33 in einer Axialnut 24 des Kolbens 23-1 verrastet sind. Der gehäuseseitige Stift 22 ist in dem Zustand, in dem der Nippel 20 an dem Gehäuse 30 festgelegt ist, durch die Federkraft des Rückschlagventils 21 belastet, gegen die der gehäuseseitige Stift 22 ansteht, um es offen zu halten. Der gehäuseseitige Stift 22 möchte also nach links ausweichen, was durch die Verriegelungspins 34 verhindert wird, gegen die sich der gehäuseseitige Stift 22 über einen daran angebrachten Anschlag 25 und ein wiederum gegen diesen anliegendes Halteelement 36 abstützt. Das Medium kann in dieser Stellung des Verschlussmechanismus durch den Ringspalt 37 strömen und wird schließlich radial nach außen gelenkt und umströmt die Hülse 33. Der Fluidkanal 15 ist an dem Kolbenkopf 23-2 mittels einer Axialdichtung gegen den entlüfteten Innenraum 35-1 der Hülse 33 abgedichtet, und eine weitere Axialdichtung ist im Bereich seines Schafts gegen den Nippel 30 vorgesehen.

Im Abrissfall bewegt sich nun die Hülse 33 entgegen dem Rest des Nippel 30 nach rechts, wobei das nippelseitige Rückschlagventil 31 geschlossen wird, weil sich auch der nippelseitige Stift 32 mitbewegt und das Rückschlagventil 31 entlastet, so dass es in seinen Dichtsitz einrückt und den schlauchseitigen Fluidkanal 15 schließt. Mit Veränderung des Kräftegleichgewichts an der Hülse 33, spätestens aber nach Überwindung des Abstands A läuft die Hülse 33 bewegungsgekoppelt mit dem Rest des Nippels 30 nach links mit, wobei nun auch das gehäuseseitige Rückschlagventil 21 geschlossen wird, weil sich auch der gehäuseseitige Stift 22 mitbewegt und das Rückschlagventil 21 entlastet, so dass es ebenfalls in seinen Dichtsitz einrückt und den dispenserseitigen Fluidkanal 15 schließt. Die Hülse 33 wandert danach noch weiter nach links, wobei sich nun die Verriegelungspins 34 entgegen ihrer jeweiligen Federkraft entlang der Kolbenschräge 23-4 radial nach außen bewegen und schließlich von dem Kolbenkopf 23-2 freikommen. Über den entlüfteten Innenraum 35-1, in dem die Kolbenspitze 23-3 aufgenommen ist, kann die Hülse 33 schließlich von dem Gehäuse 20 getrennt werden, da kein Gegendruck aufgebaut wird. Über die Kolbenspitze 23-3 kann umgekehrt der die Hülse 33 bei (Wieder)Montage des Nippels 30 leicht in die Gehäusebuchse 27 eingesteckt werden, da die Verriegelungspins 34 dabei ähnlich wie bei Abreißen des Nippels 20 gegen deren jeweilige Federkraft radial nach außen gedrückt werden und schließlich wieder in einer Axialnut 24 verrasten.

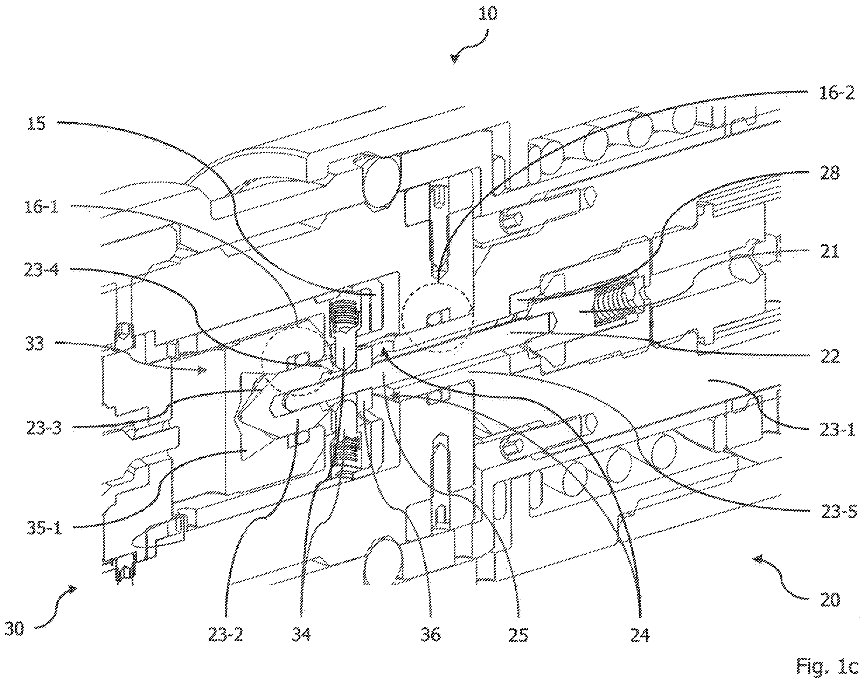

Figur 1c zeigt eine vergrößerte längsgeschnittene perspektivische Ansicht des Verschlussmechanismus der Kupplung 10 von Figur 1a zum besseren Verständnis des Eingriffs der federgelagerten Verriegelungselemente 34 in gegenüberliegende Axialnuten 24 des Kolbens 23-1. Gegen diese Verriegelungselemente 34 liegt der gehäuseseitige Stift 22 an und hält das gehäuseseitige Rückschlagventil 21 gegenüber einer den Ventilsitz bildenden Dichtung 28 offen. Dabei stützt sich der gehäuseseitige Stift 22 über eine daran ausgebildeten radialen Anschlag 25 und eine wiederum dagegen anliegendes Halteelement 36 gegen die Verriegelungselement 34 ab, die hier als federgelagerte Pins mit halbkugelförmig geformtem Kopf ausgestaltet sind. Bis zur vollständigen Schließung des gehäuseseitigen Rückschlagventils 21 können sich die Verriegelungselemente 34 entlang der Axialnuten 24 bewegen, bis sie - bei Weiterbewegung der Hülse 33 - über die Kolbenschräge 23-4 entgegen der Federkraft radial nach außen gedrückt und über den Kolbenkopf 23-2 und schließlich die Kolbenspitze 23-3 gezogen werden. Das Halteelement 36 ist dabei so ausgelegt, dass es einerseits den gehäuseseitigen Stift 22 umgreift und andererseits gegenüberliegende Nocken aufweist, die in den jeweiligen Axialnuten 24 geführt sind, wodurch unabhängig von einer möglichen Verdrehung des gehäuseseitigen Stifts 22 eine stets definierter Anschlag gegenüber den Verriegelungsstiften 34 gebildet wird. Ein Abziehen der Hülse 33 von dem Kolbenkopf 23-2 ist dadurch gewährleistet, dass der entlüftete Innenraum 35-1 keinen Gegendruck aufbaut, der dieser Bewegung entgegenwirken könnte. Der Fluidkanal ist gegenüber dem entlüfteten Innenraum 35-1 und der Umgebung über jeweilige Ringdichtungen 16-1 und 16-2 am Kolbenkopf 23-2 beziehungsweise am Kolbenschaft 23-5 abgedichtet.

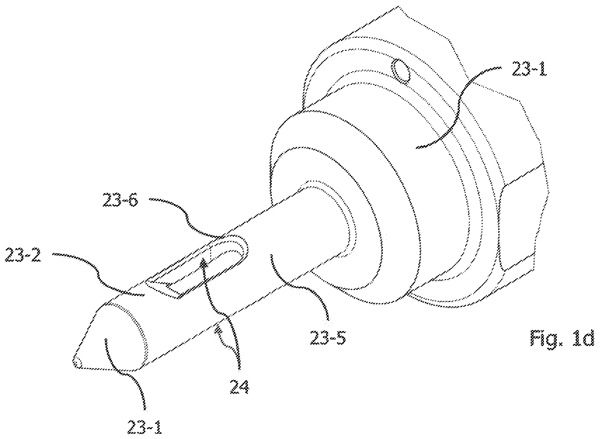

Figur 1d zeigt eine vergrößerte perspektivische Ansicht nur des Kolbens 23-1 der Kupplung 10 von Figur 1a zur besseren Sichtbarkeit der gegenüberliegenden Axialnuten 24. In dieser Ausführungsform sind diese als schlitzartige Ausfräsung gestaltet, die insbesondere an ihrem Außenrand eine umlaufende Fase 23-6 aufweist. Diese Fase 23-6 dient der Entgratung des Kolbens 23-1, und ist beispielsweise durch lediglich einen Fräsvorgang zusammen mit der Kolbenschräge 23-4 mit an der Axialnut 24 anbringbar.

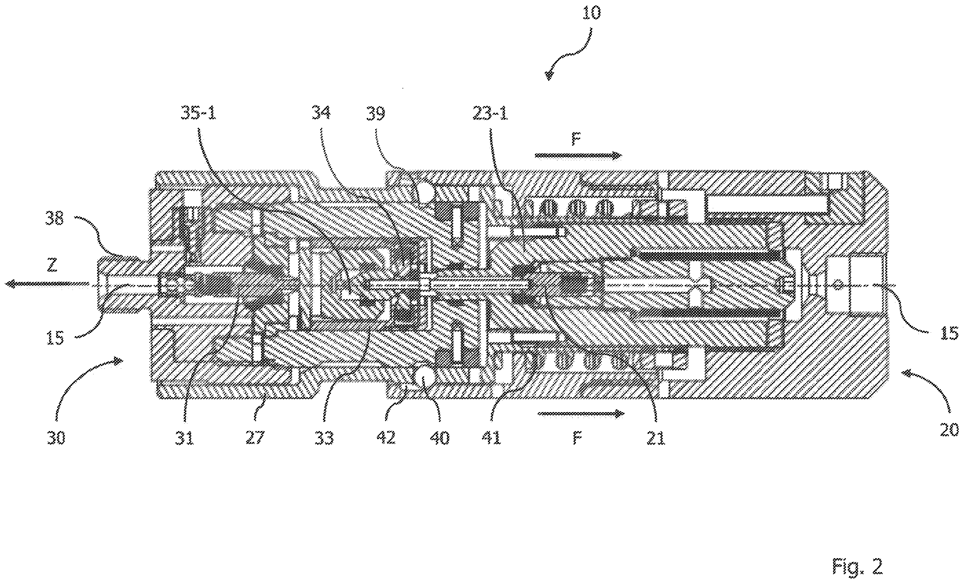

Figuren 2 bis 5 zeigen jeweilige längsgeschnittene Seitenansichten der erfindungsgemäßen Kupplung der Figur 1 im Abrissfall.

Ausgehend von dem verbundenen Zustand von Nippel 30 und Gehäuse 20 in Figur 1a zeigt Figur 2 dabei eine erste Stellung des Nippels 30 an dem Gehäuse 20, nachdem die Zugkraft Z an dem Nippel 30 eine Kraft F der Feder 41 überschritten hat. Der Nippel hat sich dabei zusammen mit der Gehäusebuchse 27 entgegen der Federkraft F so weit nach links bewegt, dass die Kugeln 40 der Kugel- / Federsicherung fast in die Entriegelungsnut 42 ausweichen können, jedenfalls durch die der Bewegung der Gehäusebuchse 27 entgegengesetzte Bewegung der Hülse 33 nach rechts das nippelseitige Rückschlagventil 31 schon geschlossen, wenigstens aber teilweise geschlossen wurde. Damit ist bereits in diesem Abreißzustand eine zuverlässige schlauchseitige Abdichtung des Fluidkanals 15 erfolgt.

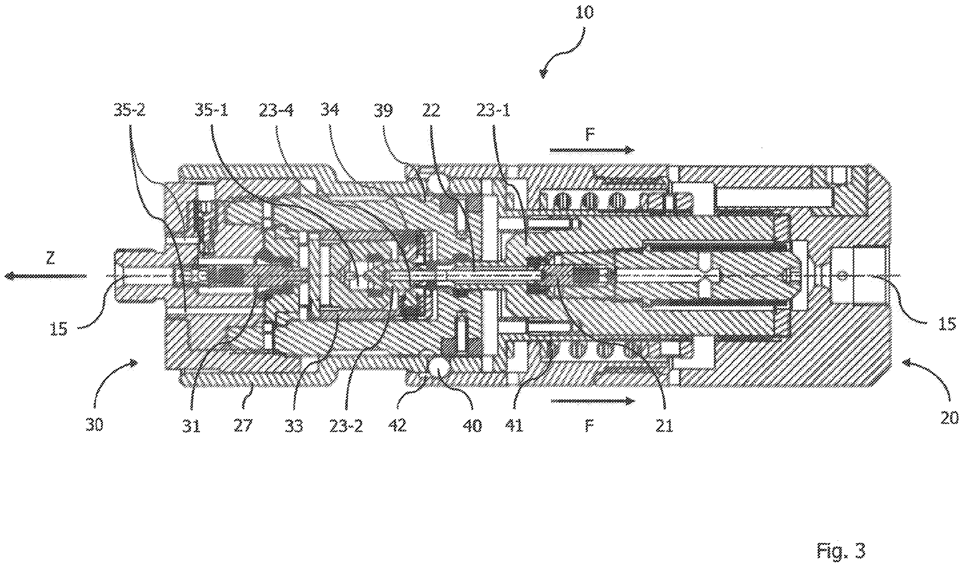

Figur 3 zeigt eine zweite Stellung des Nippels 30 an dem Gehäuse 20, in welcher die Kugeln vollständig in die Entriegelungsnut 42 eingerückt und vollständig aus der Verriegelungsnut 39 ausgerückt sind. Der Nippel 30 ist damit nicht mehr an dem Gehäuse 20 festgelegt und nimmt spätestens jetzt die Hülse 33 mit sich nach links, wobei die Verriegelungspins 34 entgegen deren jeweiliger Federkraft entlang der Kolbenschräge 23-4 radial nach außen gedrückt werden. Dadurch wird der Kolbenkopf 23-2 des Kolbens 23-1 aus dem entlüfteten Innenraum 35-1 herausgezogen, der zur Meidung eines Gegendrucks über wenigstens einen Entlüftungskanal 35-2 mit der Umgebung in Verbindung steht. Mit der Hülse 33 und deren Verriegelungspins 34 wandert auch der gehäuseseitige Stift 22 unter der Federlast des gehäuseseitigen Rückschlagventils 21 nach links, bis dieses in den Dichtsitz einrückt und auch den dispenserseitigen Fluidkanal 15 schließt.

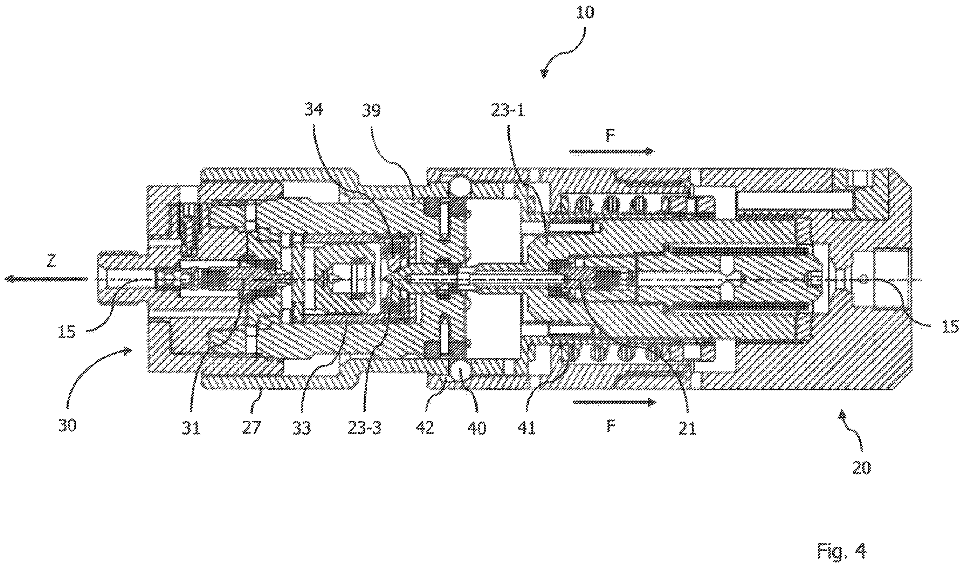

Figur 4 zeigt eine dritte Stellung des Nippels an dem Gehäuse 20, in welcher sowohl das nippelseitige Rückschlagventil 31 - abhängig von seiner spezifischen Auslegung - wenigstens teilweise geschlossen ist, und das gehäuseseitige Rückschlagventil 21 vollständig geschlossen ist. Trotz Abriss des Nippels 30 ist damit eine unkontrollierte Abgabe des Mediums weder auf der Schlauch- noch auf der Dispenser-Seite mehr möglich. Die Verriegelungspins 34 gleiten in dieser Stellung federdruckbelastet an der Kolbenspitze 23-3 radial nach innen und die Hülse 33 wie auch der Nippel 30 ist frei.

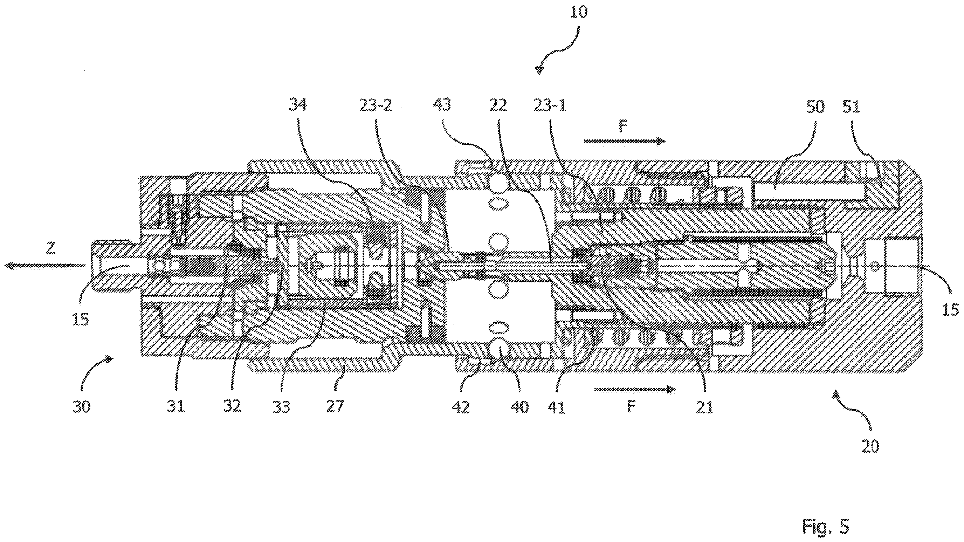

Figur 5 zeigt schließlich eine vierte Stellung des Nippels 30 an dem Gehäuse 20, bei dem der Nippel 30 frei in der Gehäusebuchse 27 gleiten und von dem Gehäuse 20 getrennt werden kann. In dieser Stellung können die Kugeln 40 der Kugel- / Federsicherung wieder aus der Entriegelungsnut 42 freigegeben werden, da diese nicht mehr durch den davorliegenden Nippel 30 blockiert sind. Die derart entriegelte Gehäusehülse 27 wird dann unter dem Einfluss der Kraft F der Feder 41 zurückgezogen, wobei die Kugeln 40 über eine Nutschräge 43 radial nach innen geführt werden.

Im entkoppelten Zustand der Kupplung 10 ist damit eine rasche (Wieder)Montage des Nippels 30 an dem Gehäuse 20 nicht ohne weiteres möglich, da die Kugeln 40 ein Einführen des Nippels 30 blockieren würden. Um die Kugeln 40 entgegen der Kraft F der Feder 41 dennoch wieder in die Verriegelungsnut 42 zurückzuführen, ist an dem Gehäuse 20 ein Exzentermechanismus vorgesehen, der einen längsverschiebbaren Bolzen 50 und einen Exzenter 51 zum Bewegen des Bolzens 50 in Richtung der Feder 41 umfasst. Der Exzenter 51 weist dabei einen von außen zugänglichen Eingriff zum Ansetzen eines Werkzeugs auf, mit dem dieser bedient werden kann. Über den nach links verschobenen Bolzen 50 lässt sich dabei die Feder 41 so vorspannen, dass die Gehäusebuchse 27 lastfrei ist, wenn die Kugeln 40 über der Verriegelungsnut 42 zu liegen kommen. Der Nippel 30 kann damit einfach in die Gehäusebuchse 27 eingesteckt und über die Entlastung der Feder 41 mittel Exzentermechanismus 50, 51 an dem Gehäuse 20 festgelegt weden. Dabei gleiten die Verriegelungspins 34 über die Kolbenspitze 23-3 hinweg und greifen hinter dem Kolbenkopf 23-2 in eine Axialnut 24 des Kolbens 23-1 ein. In diesem Zustand wird das nippelseitige Rückschlagventil 31 über den nippelseitigen Stift 32 geöffnet, der mit der Hülse 33 verbunden ist. Andererseits wird auch das gehäuseseitige Rückschlagventil 21 über den in dem Kolben 23-1 geführten Stift 22 geöffnet, der über den Anschlag 25 und das Halteelement 36 gegen die Verriegelungspins 34 anliegt.

In der Summe ist mit der erfindungsgemäßen Kupplung wird damit die Betankungssicherheit eines Fahrzeugs auf einfache und zuverlässige, zudem kostengünstige Weise erhöht, selbst in dem ungewöhnlichen Fall, in dem ein Abriss des Schlauchs vorkommen sollte.

### Bezugszeichenliste

- 10: Kupplung
- 15: Fluidkanal
- 16-1: Ringdichtung
- 16-2: Ringdichtung
- 20: Gehäuse
- 21: Gehäuseseitiges Rückschlagventil
- 22: Gehäuseseitiger Stift
- 23-1: Kolben
- 23-2: Kolbenkopf
- 23-3: Kolbenspitze
- 23-4: Kolbenschräge
- 23-5: Kolbenschaft
- 23-6: Phase
- 24: Axialnut
- 25: Anschlag
- 26: Filter
- 27: Gehäusebuchse
- 28: Dichtung
- 30: Nippel
- 31: Nippelseitiges Rückschlagventil
- 32: Nippelseitiger Stift
- 33: Hülse
- 34: Verriegelungselemente
- 35-1: Entlüfteter Innenraum
- 35-2: Entlüftungskanal
- 36: Halteelement
- 37: Ringspalt
- 38: Gewindeanschluss
- 39: Verriegelungsnut
- 40: Kugel
- 41: Feder
- 42: Entriegelungsnut
- 43: Nutschräge
- 50: Bolzen
- 51: Exzenter
- A: Abstand
- F: Federkraft
- Z: Zugkraft

## Patentansprüche

1. Kupplung (10) zur Übertragung von Fluiden, mit einem Gehäuse (20) und einem daran festlegbaren Nippel (30), der bei Überschreiten einer vorbestimmten axialen Zugkraft (Z) unter Überwindung einer Federkraft (F) von dem Gehäuse (20) trennbar ist, und mit einem das Gehäuse (20) und den Nippel (30) durchtretenden Fluidkanal (15), in dessen Verlauf ein gehäuseseitiges und ein nippelseltiges Rückschlagventil (21, 31) angeordnet sind, und der radial gelenkt um einen entlüfteten zylindrischen Innenraum (35) des Nippels (30) herum geführt Ist, **dadurch gekennzeichnet, dass** bei der Kupplung ein Verschlussmechanismus einen gehäuseseltigen Stift (22) und einen nippelseltigen Stift (32) und eine zwischen diesen Stiften angeordnete Hülse (33) umfasst, die axial bewegbar In dem Innenraum (35) des Nippels (30) angeordnet Ist, und mittels federdruckgelagerten Verriegelungselementen (34) mit dem gehäuseseitigen Stift (22) so verriegelbar Ist, dass bei festgelegtem Nippel (30) die Rückschlagventile (21, 31) entgegen deren Federkraft offen gehalten werden, und bei gelöstem Nippel (30) das gehäuseseitige Rückschlagventil (21) vollständig geschlossen und das nippelseitige Rückschlagventil (31) wenigstens teilweise geschlossen ist, und bei welcher die Hülse (33) einen gehäuseseitigen Kolben (23) umgreift, und über die Verriegelungselemente (34) daran festlegbar und entgegen deren Federkraft davon trennbar Ist, und der gehäuseseitige Stift (22) axial bewegbar in dem Kolben (23) geführt Ist, und sich in einem geöffneten Zustand des gehäuseseitigen Rückschlagventils (21) gegen die Verriegelungselemente (34) abstützt.

2. Kupplung (10) nach Anspruch 1, bei welcher der Kolben (23) wenigstens eine Axialnut (24) aufweist, in welche ein jeweiliges Verriegelungselement (34) eingreift, und die eine sich daran anschließende, zum freien Ende des Kolbens (23) hin stetig radial nach außen verlaufende Kolbenschräge (23-4) aufweist, über welche die Verriegelungselemente (34) beim Abziehen der Hülse (33) von dem Kolben (23) entgegen deren Federkraft radial nach außen drückbar sind.

3. Kupplung (10) nach Anspruch 1 oder 2, bei welcher der Kolben (23) eine Spitze (23-2) aufweist, die sich zum freien Ende des Kolbens (23) hin stetig verjüngt, über welche die Verriegelungselemente (34) beim Aufstecken der Hülse (33) auf den Kolben (23) entgegen deren Federkraft radial nach außen drückbar sind.

4. Kupplung (10) nach einem der vorstehenden Ansprüche, bei welcher ein freies Ende des Kolbens (23) gegen den Fluidkanal (15) abgedichtet und bei an dem Gehäuse (20) festgelegtem Nippel (30) In dem entlüfteten Innenraum (35) aufgenommen ist.

5. Kupplung (10) nach Anspruch 3 oder 4, bei welcher sich die stetig verjüngende Spitze (23-2) des Kolbens (23) in den entlüfteten Innenraum (35) hinein erstreckt.

6. Kupplung (10) nach einem der vorstehenden Ansprüche, bei welcher sich der gehäuseseitige Stift (22) über einen axialen Anschlag (25) und insbesondere zusätzlich über ein den Stift (22) ringförmig umgreifendes Halteelement (36) gegen die Verriegelungselemente (34), Insbesondere gegen Verriegelungspins abstützt.

7. Kupplung (10) nach einem der vorstehenden Ansprüche, bei welcher ein Entlüftungskanal vorgesehen ist, der bei an dem Gehäuse (20) festgelegtem Nippel (30) dessen entlüfteten Innenraum (35) mit einem nicht von dem Gehäuse (20) umfassten Teil des Nippels (30) verbindet.

8. Kupplung (10) nach einem der vorstehenden Ansprüche, bei welcher die Hülse (33) fest mit dem nippelseitigen Stift (32) verbunden und dieser Insbesondere als Zylinderstift ausgeführt ist.

9. Kupplung (10) nach einem der vorstehenden Ansprüche, bei welcher der Fluidkanal (15) im Bereich der Verriegelungselemente (34), Insbesondere in einer radialen Lageebene der Verriegelungselemente (34), von dem Kolben (23) aus radial durch die Hülse (33) verläuft.

10. Kupplung (10) nach einem der vorstehenden Ansprüche, bei welcher der Nippel (30) über eine kombinierte Kugel- / Federsicherung (40, 41) gegen Trennung von dem Gehäuse (20) durch die vorbestimmte axiale Zugkraft (Z) festgelegt ist.

11. Kupplung (10) nach Anspruch 10, bei welcher die kombinierte Kugel- / Federsicherung (40, 41) zum Einstecken des Nippels (30) in das Gehäuse (20) über einen Exzentermechanismus (50, 51) vorspannbar Ist.

12. Verfahren zum Verschließen des Fluidkanals (15) einer Kupplung (10) nach einem der vorstehenden Ansprüche, bei dem eine vorbestimmte axiale Zugkraft (Z) überwunden und der Nippel (30) von dem Gehäuse (20) gelöst wird, und durch axiales Bewegen des Nippels (30) relativ zu der Hülse (33) ein nippelseitiges Rückschlagventil (31) wenigstens teilweise geschlossen wird, und durch axiales Bewegen des Nippels (30) gemeinsam mit der Hülse (33) ein gehäuseseitiges Rückschlagventil (21) vollständig geschlossen wird.

13. Verfahren nach Anspruch 12, bei dem die kombinierte Kugel- / Federsicherung (40, 41) über den Exzentermechanismus (50, 51) vorgespannt, der Nippel (30) In das Gehäuse (20) eingesteckt und durch Entspannen der kombinierten Kugel- / Federsicherung (40, 41) festgelegt wird.

14. Verwendung einer Kupplung (10) nach einem der Ansprüche 1 bis 11 zur Betankung von Fahrzeugen, insbesondere mit Wasserstoff, Erdgas oder Flüssiggas.

## Claims

1. A coupling (10) for transferring fluids, having a housing (20) and a nipple (30) which can be fixed thereon, which can be separated from the housing (20) when a predetermined axial tensile force (Z) is exceeded while overcoming a spring force (F), and having a fluid channel (15) which passes through the housing (20) and the nipple (30), in the course of which a housing-side and a nipple-side non-return valve (21, 31) are arranged, and which is guided in a radially directed manner around a vented cylindrical interior (35) of the nipple (30), **characterized in that** in this coupling a closure mechanism comprises a housing-side pin (22) and a nipple-side pin (32), and a sleeve (33) arranged between said pins, which is arranged in an axially movable manner in the interior (35) of the nipple (30), and can be locked by means of spring-pressure-mounted locking elements (34) with the housing-side pin (22), such that when the nipple (30) is fixed the non-return valves (21, 31) are held open against their spring force, and when the nipple (30) is released the housing-side non-return valve (21) is completely closed and the nipple-side non-return valve (31) is at least partially closed, and in which the sleeve (33) engages around a housing-side piston (23), and via the locking elements (34) can be fixed thereto and can be separated therefrom against the spring force, and the housing-side pin (22) is guided in an axially movable manner in the piston (23), and is supported in an open state of the housing-side non-retrun valve (21) against the locking elements (34).

2. The coupling according to claim 1, in which the piston (23) has at least one axial groove (24), into which a respective locking element (34) engages, and which has a piston bevel (23-4), which adjoins the latter and runs continuously radially outwards towards the free end of the piston (23), via which the locking elements (34) can be pressed radially outwards against their spring force when the sleeve (33) is removed from the piston (23).

3. The coupling (10) according to claim 1 or 2, in which the piston (23) has a tip (23-2), which tapers continuously towards the free end of the piston (23), via which the locking elements (34) can be pressed radially outwards against their spring force when the sleeve (33) is mounted on the piston (23).

4. The coupling (10) according to any one of the preceding claims, in which a free end of the piston (23) is sealed off against the fluid channel (15) and is accommodated in the vented interior (35) when the nipple (30) is fixed to the housing (20).

5. The coupling (10) according to claim 3 or 4, in which the continuously tapering tip (23-2) of the piston (23) extends into the vented interior (35).

6. The coupling (10) according to any one of the preceding claims, in which the housing-side pin (22) is supported against the locking elements (34), in particular, against locking pins via an axial stop (25) and, in particular, additionally via a retaining element (36), which engages annularly around the pin (22).

7. The coupling (10) according to any one of the preceding claims, in which a ventilation channel is provided, which when the nipple (30) is fixed to the housing (20) connects its vented interior (35) to a part of the nipple (30) not comprised by the housing (20).

8. The coupling (10) according to any one of the preceding claims, in which the sleeve (33) is fixedly connected to the pin (32) on the nipple side and the latter is designed, in particular, as a cylinder pin.

9. The coupling (10) according to any one of the preceding claims, in which the fluid channel (15) in the region of the locking elements (34), in particular, in a radial position plane of the locking elements (34), runs radially through the sleeve (33) from the piston (23).

10. The coupling (10) according to any one of the preceding claims, in which the nipple (30) is fixed against separation from the housing (20) by a predetermined axial tensile force (Z) by means of a combined ball- / spring securing means (40, 41).

11. The coupling (10) according to claim 10, in which the combined ball- / spring securing means (40, 41) for inserting the nipple (30) into the housing (20) can be pretensioned by means of an eccentric mechanism (50, 51).

12. A method for closing the fluid channel (15) of a coupling (10) according to any one of the preceding claims, in which a predetermined axial tensile force (Z) is overcome and the nipple (30) is released from the housing (20), and a nipple-side non-return valve (31) is at least partially closed by an axial movement of the nipple (30) relative to the sleeve (33) and a housing-side non-return valve (21) is completely closed by an axial movement of the nipple (30) together with the sleeve (33).

13. The method according to claim 12, in which the combined ball- / spring securing means (40, 41) is pretensioned via the eccentric mechanism (50, 51), the nipple (30) is inserted into the housing (20) and is fixed by relaxing the combined ball- / spring securing means (40, 41).

14. A use of a coupling (10) according to any one of claims 1 to 11 for refuelling vehicles, in particular, with hydrogen, natural gas or liquefied gas.

## Revendications

1. Accouplement (10) pour la transmission de fluides, avec un boîtier (20) et un mamelon (30) qui peut être fixé sur celui-ci, qui peut être séparé du boîtier (20) en surmontant une force de ressort (F) lorsqu'une force de traction axiale prédéterminée (Z) est dépassée, et avec un canal de fluide (15) passant à travers le boîtier (20) et le mamelon (30), au cours duquel un clapet anti-retour du côté boîtier et un clapet anti-retour du côté mamelon (21, 31) sont disposés, et qui est orienté radialement autour d'un intérieur cylindrique ventilé (35) du mamelon (30), **caractérisé en ce que** dans le accouplement un mécanisme de fermeture comprend une goupille du côté boîtier (22) et une goupille du côté mamelon (32), et un manchon (33) disposé entre ces goupilles, qui est disposé axialement mobile à l'intérieur (35) du mamelon (30), et peut être verrouillée au moyen d'éléments de verrouillage à ressort (34) avec la goupille du côté boîtier (22) de telle sorte que, lorsque le mamelon (30) est fixe, les clapets anti-retour (21, 31) sont maintenus ouverts contre leur force de ressort, et lorsque le mamelon (30) est détaché, le clapet anti-retour du côté du boîtier (21) est complètement fermé et le clapet anti-retour du côté du mamelon (31) est au moins partiellement fermé, et dans lequel le manchon (33) s'engage autour d'un piston du côté du boîtier (23), et peut être fixé sur celui-ci via les éléments de verrouillage (34) et peut en être séparé contre leur force de ressort, et la goupille du côté du boîtier (22) est guidé mobile axialement dans le piston (23) et se soutient contre les éléments de verrouillage (34) lorsque le clapet anti-retour (21) sur le boîtier est ouvert.

2. Accouplement (10) selon la revendication 1, dans lequel le piston (23) a au moins une rainure axiale (24), dans laquelle s'engage un élément de verrouillage respectif (34), et qui a un biseau de piston (23-4), qui après ça s'étend en continu radialement vers l'extrémité libre du piston (23), sur laquelle les éléments de verrouillage (34) peuvent être pressés radialement vers l'extérieur contre la force du ressort lorsque le manchon (33) est retiré du piston (23).

3. Accouplement (10) selon la revendication 1 ou 2, dans lequel le piston (23) a une pointe (23-2) qui se rétrécit continuellement vers l'extrémité libre du piston (23), par laquelle les éléments de verrouillage (34) peuvent être pressé radialement vers l'extérieur contre la force du ressort lorsque le manchon (33) est mise sur le piston (23.

4. Accouplement (10) selon l'une des revendications précédentes, dans lequel une extrémité libre du piston (23) est étanche contre le canal de fluide (15) et est reçue dans l'espace intérieur ventilé (35) avec le mamelon (30) fixé au boîtier (20).

5. Accouplement (10) selon la revendication 3 ou 4, dans lequel la pointe effilée en continu (23-2) du piston (23) s'étend dans l'intérieur ventilé (35).

6. Accouplement (10) selon l'une des revendications précédentes, dans lequel la goupille du côté boîtier (22) s'étend via une butée axiale (25) et notamment supplémentaire via un élément de retenue (36), qui entoure la goupille (22) en forme d'anneau, contre les éléments de verrouillage (34), notamment contre broches de verrouillage.

7. Accouplement (10) selon l'une des revendications précédentes, dans lequel un canal de ventilation est prévu qui, lorsque le mamelon (30) est fixé au boîtier (20), connecte son espace intérieur ventilé (35) avec une partie du mamelon (30) non englobée par le boîtier (20).

8. Accouplement (10) selon l'une des revendications précédentes, dans lequel le manchon (33) est fermement connecté avec la goupille du côté du mamelon (32), et c'est réalisé notamment en forme d'une goupille cylindrique.

9. Accouplement (10) selon l'une des revendications précédentes, dans lequel le canal de fluide (15) dans la zone des éléments de verrouillage (34), notamment dans un plan radial des éléments de verrouillage (34), à partir du piston (23) radialement traverse le manchon (33).

10. Accouplement (10) selon l'une des revendications précédentes, dans lequel le mamelon (30) est fixé par un verrou combiné bille / ressort (40, 41) contre la séparation du boîtier (20) par la force de traction axiale prédéterminée (Z).

11. Accouplement (10) selon la revendication 10, dans lequel le verrou combiné bille / ressort (40, 41) peut être précontraint pour insérer le mamelon (30) dans le boîtier (20) via un mécanisme excentrique (50, 51).

12. Procédé pour fermer le canal de fluide (15) d'un accouplement (10) selon l'une des revendications précédentes, dans lequel une force de traction axiale prédéterminée (Z) est surmontée et le mamelon (30) est libéré du boîtier (20), et en déplaçant axialement le mamelon (30) par rapport au manchon (33) un clapet anti-retour du côté mamelon (31) est au moins partiellement fermé, et en déplaçant axialement le mamelon (30) ensemble avec le manchon (33) un clapet anti-retour du côté boîtier (21) est complètement fermé.

13. Procédé selon la revendication 12, dans lequel le verrou combiné bille / ressort (40, 41) est précontraint via le mécanisme excentrique (50, 51), le mamelon (30) est inséré dans le boîtier (20) et est fixé par relaxant le verrou combiné bille / ressort (40, 41).

14. Utilisation d'un accouplement (10) selon l'une des revendications 1 à 11 pour le ravitaillement de véhicules, notamment en hydrogène, en gaz naturel ou en gaz liquide.
